(19) Europäisches Patentamt
European Patent Office
Office européen des brevets

(11) **EP 4 287 304 A1**

(12) **EUROPEAN PATENT APPLICATION**
published in accordance with Art. 153(4) EPC

(43) Date of publication:
**06.12.2023 Bulletin 2023/49**

(21) Application number: **22745733.0**

(22) Date of filing: **21.01.2022**

(51) International Patent Classification (IPC):
**H01M 4/133** (2010.01)    **H01M 4/134** (2010.01)
**H01M 4/62** (2006.01)     **H01M 10/0587** (2010.01)

(52) Cooperative Patent Classification (CPC):
**H01M 4/133; H01M 4/134; H01M 4/62;**
**H01M 10/0587;** Y02E 60/10; Y02P 70/50

(86) International application number:
**PCT/JP2022/002126**

(87) International publication number:
**WO 2022/163512 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.01.2021 JP 2021013581**

(71) Applicant: **Panasonic Energy Co., Ltd.
Moriguchi-shi, Osaka, 570-8511 (JP)**

(72) Inventors:
• **MIZUKOSHI, Fumikazu
Kadoma-shi, Osaka 571-0057 (JP)**
• **SAKITANI, Nobuhiro
Kadoma-shi, Osaka 571-0057 (JP)**

(74) Representative: **Novagraaf International SA
Chemin de l'Echo 3
1213 Onex, Geneva (CH)**

(54) **NON-AQUEOUS ELECTROLYTE SECONDARY BATTERY**

(57)    Provided is a non-aqueous electrolyte secondary battery having improved charge and discharge cycle characteristics. The non-aqueous electrolyte secondary battery according to one mode of the present disclosure comprises an electrode body (14) in which a band-form positive electrode (11) and a band-form negative electrode (12) are wound with a separator (13) interposed therebetween, an electrolytic liquid, and an exterior body (15) that accommodates the electrode body (14) and the electrolytic liquid. The negative electrode (12) has a negative electrode current collector (40), and a negative electrode mixture layer (42) that is formed on the surface of the negative electrode current collector (40) and that contains a negative electrode active material and an electroconductive agent. In the negative electrode mixture layer (42), the electroconductive agent content in a winding outer end (42b) is greater than the electroconductive agent content in a winding inner end (42a), the negative electrode mixture layer (42) having a region in which the electroconductive agent content continuously increases from the winding-inner-end side (42a) to the winding-outer-end side (42b).

Figure 3

**Description**

TECHNICAL FIELD

The present disclosure generally relates to a non-aqueous electrolyte secondary battery.

BACKGROUND ART

A positive electrode and negative electrode of a non-aqueous electrolyte secondary battery each has a current collector and a mixture layer formed on a surface of the current corrector. The mixture layer includes an active material that may reversibly occlude and release Li ions. Patent Literature 1 discloses art for increasing a content rate of a conductive agent in a mixture layer in order to increase a porosity of the mixture layer on a side of an inner end of winding, which has relatively low holdability of an electrolyte liquid, and to achieve a conductive path between the active materials in a wound electrode assembly of a secondary battery.

CITATION LIST

PATENT LITERATURE

PATENT LITERATURE 1: Japanese Unexamined Patent Application Publication No. 2011-165388

SUMMARY

TECHNICAL PROBLEM

The present inventors have made intensive investigation, and consequently found that, in a wound electrode assembly, an outer end of winding largely expands and contracts with charge and discharge of a battery compared with an inner end of winding, and thereby a negative electrode mixture layer in the outer end of winding is likely to deteriorate electron conductivity between negative electrode active materials. The art disclosed in Patent Literature 1 does not investigate the electron conductivity between the negative electrode active materials in the outer end of winding, and still has a room for improvement of charge-discharge cycle characteristics.
It is an advantage of the present disclosure to provide a non-aqueous electrolyte secondary battery with improved charge-discharge cycle characteristics.

SOLUTION TO PROBLEM

A non-aqueous electrolyte secondary battery of an aspect of the present disclosure comprises: an electrode assembly in which a band-shaped positive electrode and a band-shaped negative electrode are wound with a separator interposed therebetween; an electrolyte liquid; and an exterior housing the electrode assembly and the electrolyte liquid, wherein the negative electrode has: a negative electrode current collector; and a negative electrode mixture layer formed on a surface of the negative electrode current collector and including a negative electrode active material and a conductive agent, and in the negative electrode mixture layer, a content rate of the conductive agent in an outer end of winding is higher than a content rate of the conductive agent in an inner end of winding, and the negative electrode mixture layer has a region where a content rate of the conductive agent continuously increases from a side of the inner end of winding to a side of the outer end of winding.

ADVANTAGEOUS EFFECT OF INVENTION

According to the secondary battery of an aspect of the present disclosure, the charge-discharge cycle characteristics may be improved.

BRIEF DESCRIPTION OF DRAWINGS

FIG. 1 is an axial sectional view of a cylindrical secondary battery of an example of an embodiment.
FIG. 2 is a perspective view of a wound electrode assembly comprised in the secondary battery illustrated in FIG. 1.
FIG. 3 is a front view of a positive electrode and a negative electrode that constitute an electrode assembly of an example of an embodiment with an unwound state.

FIGS. 4(a) to (d) are graphs indicating a change in a content rate of a conductive agent included in a negative electrode mixture layer in a longitudinal direction of FIG. 3.

DESCRIPTION OF EMBODIMENTS

Hereinafter, an example of an embodiment of a cylindrical secondary battery according to the present disclosure will be described in detail with reference to the Drawings. In the following description, specific shapes, materials, values, directions, and the like, which are examples for facilitating understanding of the present invention, may be appropriately modified with specifications of cylindrical secondary batteries. When a plurality of embodiments and modified examples are included in the following description, use in appropriate combination of characteristic portions thereof are anticipated in advance.

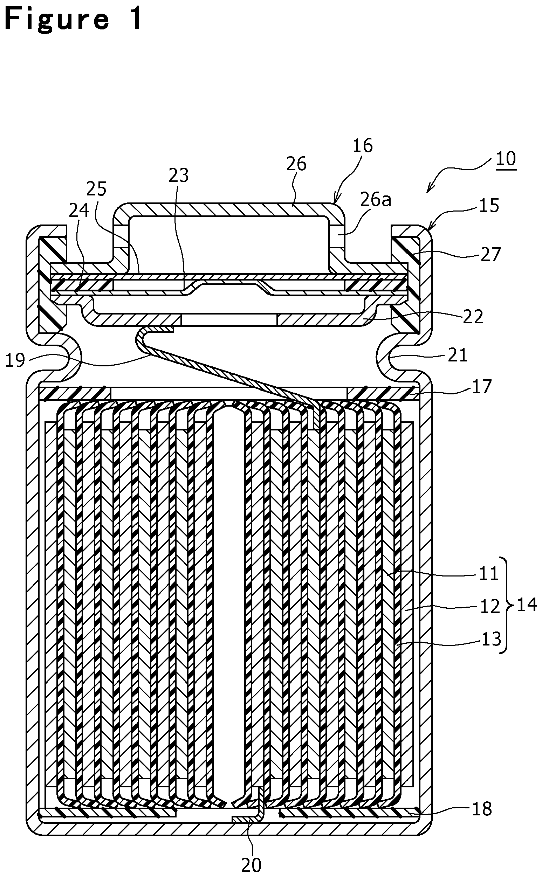

FIG. 1 is an axial sectional view of a cylindrical secondary battery 10 of an example of an embodiment. In the secondary battery 10 illustrated in FIG. 1, an electrode assembly 14 and an electrolyte liquid (not illustrated) are housed in an exterior 15. The electrode assembly 14 has a wound structure in which a band-shaped positive electrode 11 and a band-shaped negative electrode 12 are wound with a separator 13 interposed therebetween. For a non-aqueous solvent in the electrolyte liquid (organic solvent), carbonates, lactones, ethers, ketones, esters, and the like may be used, and two or more of these solvents may be mixed to use. When two or more of the solvents are mixed to use, a mixed solvent including a cyclic carbonate and a chain carbonate is preferably used. For example, ethylene carbonate (EC), propylene carbonate (PC), butylene carbonate (BC), and the like may be used as the cyclic carbonate, and dimethyl carbonate (DMC), ethyl methyl carbonate (EMC), diethyl carbonate (DEC), and the like may be used as the chain carbonate. For an electrolyte salt in the electrolyte liquid, $LiPF_6$, $LiBF_4$, $LiCF_3SO_3$, and the like, and a mixture thereof may be used. An amount of the electrolyte salt dissolved in the non-aqueous solvent may be, for example, greater than or equal to 0.5 mol/L and less than or equal to 2.0 mol/L. Hereinafter, for convenience of description, a sealing assembly 16 side will be described as "the upper side", and the bottom side of the exterior 15 will be described as "the lower side".

An opening end of the exterior 15 is capped with the sealing assembly 16 to seal inside the secondary battery 10. Insulating plates 17 and 18 are provided on the upper and lower sides of the electrode assembly 14, respectively. A positive electrode lead 19 extends upward through a through hole of the insulating plate 17, and welded with the lower face of a filter 22, which is a bottom plate of the sealing assembly 16. In the secondary battery 10, a cap 26, which is a top plate of the sealing assembly 16 electrically connected to the filter 22, becomes a positive electrode terminal. Meanwhile, a negative electrode lead 20 extends through a through hole of the insulating plate 18 toward the bottom side of the exterior 15, and welded with a bottom inner face of the exterior 15. In the secondary battery 10, the exterior 15 becomes a negative electrode terminal. When the negative electrode lead 20 is provided on the outer end of winding, the negative electrode lead 20 extends through an outside of the insulating plate 18 toward the bottom side of the exterior 15, and welded with the bottom inner face of the exterior 15.

The exterior 15 is, for example, a bottomed cylindrical metallic exterior housing can. A gasket 27 is provided between the exterior 15 and the sealing assembly 16 to achieve sealability inside the secondary battery 10. The exterior 15 has a grooved portion 21 formed by, for example, pressing the side wall thereof from the outside to support the sealing assembly 16. The grooved portion 21 is preferably formed circularly along the circumferential direction of the exterior 15, and supports the sealing assembly 16 with the upper face thereof.

The sealing assembly 16 has a stacked structure of a filter 22, a lower vent member 23, an insulating member 24, an upper vent member 25, and a cap 26 in this order from the electrode assembly 14 side. Each member constituting the sealing assembly 16 has, for example, a disk shape or a ring shape, and each member except for the insulating member 24 is electrically connected to each other. The lower vent member 23 and the upper vent member 25 are connected to each other at each of centers thereof, and the insulating member 24 is interposed between each of the circumferences thereof. If the internal pressure of the battery increases due to abnormal heat generation, for example, the lower vent member 23 breaks and thus the upper vent member 25 expands toward the cap 26 side to be separated from the lower vent member 23, resulting in cutting off of an electrical connection between both the members. If the internal pressure further increases, the upper vent member 25 breaks, and gas is discharged through an opening 26a of the cap 26.

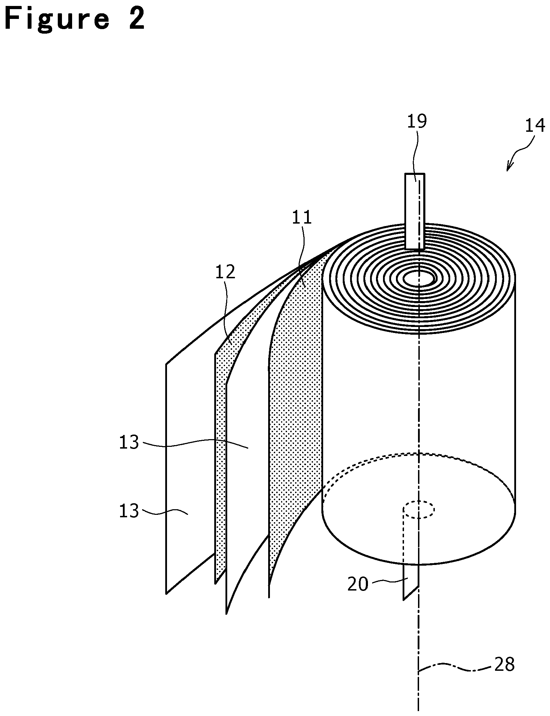

Next, the electrode assembly 14 will be described with reference to FIG. 2. FIG. 2 is a perspective view of the electrode assembly 14. As described above, the electrode assembly 14 has a wound structure in which the positive electrode 11 and the negative electrode 12 are spirally wound with the separator 13 interposed therebetween. All of the positive electrode 11, the negative electrode 12, and the separator 13 are formed in a band shaped, and spirally wound around a winding core disposed along a winding axis 28 to be alternately stacked in the radial direction of the electrode assembly 14. In the radial direction, the winding axis 28 side is referred to as the inner peripheral side, and the opposite side thereof is referred to as the outer peripheral side. In the electrode assembly 14, the longitudinal direction of the positive electrode 11 and the negative electrode 12 becomes a winding direction, and the width direction of the positive electrode 11 and the negative electrode 12 becomes an axial direction. The positive electrode lead 19 extends, on the upper end of the electrode assembly 14, toward the axial direction from a substantial center between the center and the outermost circumference in the radial direction. The negative electrode lead 20 extends, on the lower end of the electrode assembly 14, toward the axial direction from near the winding axis 28.

For the separator 13, a porous sheet having an ion permeation property and an insulation property is used. Specific examples of the porous sheet include a fine porous thin film, a woven fabric, and a nonwoven fabric. As a material of the separator 13, an olefin resin such as polyethylene and polypropylene is preferable. A thickness of the separator 13 is, for example, greater than or equal to 10 $\mu$m and less than or equal to 50 $\mu$m. The separator 13 has tended to be thinned as higher capacity and higher output of the battery. The separator 13 has a melting point of, for example, approximately greater than or equal to 130°C and less than or equal to 180°C.

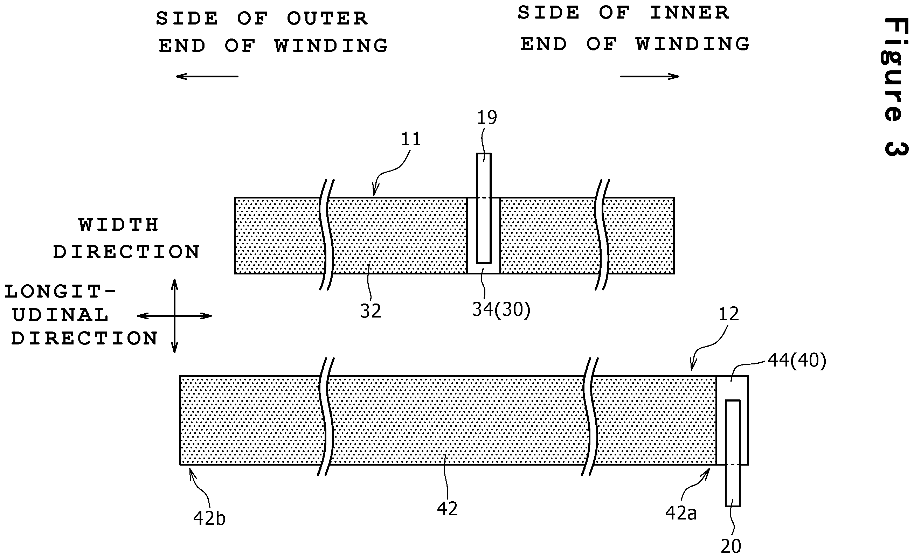

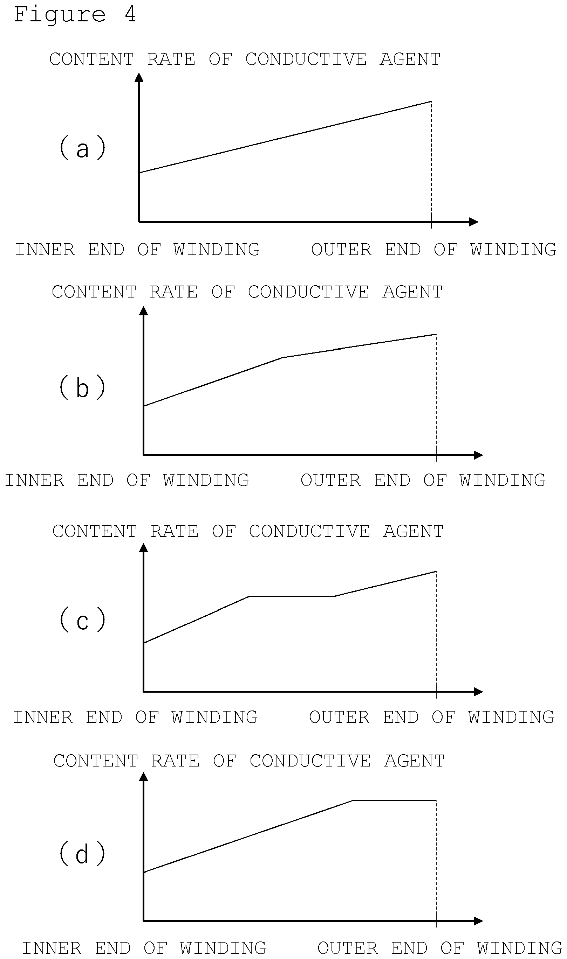

Next, the positive electrode and the negative electrode according to the present embodiment will be described with reference to FIG. 3 and FIG. 4. FIG. 3 is a front view of the positive electrode 11 and the negative electrode 12 constituting the electrode assembly 14. FIG. 3 illustrates the positive electrode 11 and the negative electrode 12 in an unwound state. As exemplified in FIG. 3, the negative electrode 12 is formed to be larger than the positive electrode 11 to prevent precipitation of lithium on the negative electrode 12 in the electrode assembly 14. In specific, a length of the negative electrode 12 in the width direction (axial direction) is larger than a length of the positive electrode 11 in the width direction. In addition, a length the negative electrode 12 in the longitudinal direction is larger than a length of the positive electrode 11 in the longitudinal direction. As a result, at least a portion on which a positive electrode mixture layer 32 of the positive electrode 11 is formed is disposed opposite to a portion on which a negative electrode mixture layer 42 of the negative electrode 12 is formed with the separator 13 interposed therebetween when wound as the electrode assembly 14.

The positive electrode 11 has a band-shaped positive electrode current collector 30 and the positive electrode mixture layer 32 formed on a surface of the positive electrode current collector 30. The positive electrode mixture layer 32 is formed on at least one of the inner peripheral side and outer peripheral side of the positive electrode current collector 30, and preferably formed on an entire region of both surfaces of the positive electrode current collector 30 except for a positive electrode exposed portion 34, described later. For the positive electrode current collector 30, a foil of a metal such as aluminum, a film in which such a metal is disposed on a surface layer thereof, and the like are used, for example. A thickness of the positive electrode current collector 30 is, for example, greater than or equal to 10 $\mu$m and less than or equal to 30 $\mu$m.

The positive electrode mixture layer 32 preferably includes a positive electrode active material, a conductive agent, and a binder. The positive electrode mixture layer 32 may be produced by, for example, applying a positive electrode mixture slurry including the positive electrode active material, the conductive agent, the binder, and a solvent such as N-methyl-2-pyrrolidone (NMP) on both the surfaces of the positive electrode current collector 30, and drying and then rolling.

On the positive electrode 11, the positive electrode exposed portion 34 where a surface of the positive electrode current collector 30 is exposed is provided. The positive electrode exposed portion 34 is a portion to which the positive electrode lead 19 is connected and a portion where a surface of the positive electrode current collector 30 is uncovered with the positive electrode mixture layer 32. The positive electrode exposed portion 34 is more widely formed than the positive electrode lead 19 in the longitudinal direction. The positive electrode exposed portion 34 is preferably provided on both surfaces of the positive electrode 11 so as to be stacked in the thickness direction of the positive electrode 11. The positive electrode lead 19 is bonded to the positive electrode exposed portion 34 with, for example, ultrasonic welding.

In the example illustrated in FIG. 3, the positive electrode exposed portion 34 is provided on a center of the positive electrode 11 in the longitudinal direction and over an entire length in the width direction. Although the positive electrode exposed portion 34 may be formed on the inner end of winding or outer end of winding of the positive electrode 11, the positive electrode exposed portion 34 is preferably provided at a position of substantially same distance from the inner end of winding and the outer end of winding from a viewpoint of current collectability. The positive electrode lead 19 connected to the positive electrode exposed portion 34 provided at such a position allows the positive electrode lead 19 to be disposed to project upward from the end surface in the width direction at the substantial center in the radial direction of the electrode assembly 14 when wounded as the electrode assembly 14. The positive electrode exposed portion 34 is provided by, for example, intermittent application in which the positive electrode mixture slurry is not applied on a part of the positive electrode current collector 30.

Examples of the positive electrode active material included in the positive electrode mixture layer 32 include a lithium-transition metal oxide containing transition metal elements such as Co, Mn, and Ni. The lithium-transition metal oxide is, for example, $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$, $Li_xMn_{2-y}M_yO_4$, $LiMPO_4$, or $Li_2MPO_4F$, wherein M represents at least one of Na, Mg, Sc, Y, Mn, Fe, Co, Ni, Cu, Zn, Al, Cr, Pb, Sb, and B, $0 < x \leq 1.2$, $0 < y \leq 0.9$, and $2.0 \leq z \leq 2.3$. These may be used singly, or a plurality of kinds thereof may be mixed to use. In terms of attempting a higher capacity of the non-aqueous electrolyte secondary battery, the positive electrode active material preferably includes a lithium-nickel composite oxide such as $Li_xNiO_2$, $Li_xCo_yNi_{1-y}O_2$, and $Li_xNi_{1-y}M_yO_z$,

wherein M represents at least one of Na, Mg, Sc, Y, Mn, Fe, Co, Ni, Cu, Zn, Al, Cr, Pb, Sb, and B, $0 < x \leq 1.2$, $0 < y \leq 0.9$, and $2.0 \leq z \leq 2.3$.

Examples of the conductive agent included in the positive electrode mixture layer 32 include carbon particles such as carbon black (CB), acetylene black (AB), Ketjenblack, carbon nanotube (CNT), graphene, and graphite. These may be used singly, or a plurality of kinds thereof may be mixed to use.

Examples of the binder included in the positive electrode mixture layer 32 include fluororesins such as polytetrafluoroethylene (PTFE) and polyvinylidene fluoride (PVdF), polyacrylonitrile (PAN), a polyimide resin, an acrylic resin, and a polyolefin resin. These may be used singly, or a plurality of kinds thereof may be mixed to use. When the positive electrode mixture slurry is prepared in an aqueous solvent, styrene-butadiene rubber (SBR), nitrile rubber (NBR), CMC or a salt thereof, polyacrylic acid or a salt thereof, polyvinyl alcohol, and the like may be used.

The negative electrode 12 has a band-shaped negative electrode current collector 40 and the negative electrode mixture layer 42 formed on a surface of the negative electrode current collector 40. The negative electrode mixture layer 42 is formed on at least one of the inner peripheral side and outer peripheral side of the negative electrode current collector 40, and preferably formed on an entire region of both surfaces of the negative electrode current collector 40 except for a negative electrode exposed portion 44, described later. For the negative electrode current collector 40, a foil of a metal such as copper, a film in which such a metal is disposed on a surface layer thereof, and the like are used, for example. A thickness of the negative electrode current collector 40 is, for example, greater than or equal to 5 μm and less than or equal to 30 μm.

The negative electrode mixture layer 42 includes a negative electrode active material and a conductive agent. The negative electrode mixture layer 42 may further include a binder. The negative electrode mixture layer 42 may be produced by, for example, applying a negative electrode mixture slurry including the negative electrode active material, the conductive agent, the binder, and a solvent such as water on both the surfaces of the negative electrode current collector 40, and drying and then rolling.

In the example illustrated in FIG. 3, the negative electrode exposed portion 44 is provided on an inner end of winding in the longitudinal direction of the negative electrode 12 and over an entire length in the width direction of the current collector. The negative electrode exposed portion 44 is a portion to which the negative electrode lead 20 is connected and a portion where a surface of the negative electrode current collector 40 is uncovered with the negative electrode mixture layer 42. The negative electrode exposed portion 44 is more widely formed than a width of the negative electrode lead 20 in the longitudinal direction. The negative electrode exposed portion 44 is preferably provided on both surfaces of the negative electrode 12 so as to be stacked in the thickness direction of the negative electrode 12.

In FIG. 3, an inner end of winding 42a of the negative electrode mixture layer 42 is a portion adjacent to the negative electrode exposed portion 44. Meanwhile, an outer end of winding 42b of the negative electrode mixture layer 42 is identical to the outer end of winding of the negative electrode 12. The negative electrode mixture layer 42 is continuously present from the inner end of winding 42a to the outer end of winding 42b.

In the present embodiment, the negative electrode lead 20 is bonded to a surface on the inner peripheral side of the negative electrode current collector 40 by, for example, ultrasonic welding. One end of the negative electrode lead 20 is disposed on the negative electrode exposed portion 44, and the other end extends downward from a lower end of the negative electrode exposed portion 44.

The position of the negative electrode lead 20 to be disposed is not limited to the example illustrated in FIG. 3, and the negative electrode lead 20 may be provided only on the outer end of winding of the negative electrode 12. The negative electrode lead 20 may also be provided on the inner end of winding and outer end of winding of the negative electrode 12. In this case, the current collectability is improved. Contacting the negative electrode exposed portion 44 in the outer end of winding of the negative electrode 12 with the inner peripheral surface of the exterior 15 (see FIG. 1) may electrically connect the outer end of winding with the exterior 15 without the negative electrode lead 20 on the outer end of winding of the negative electrode 12. The negative electrode exposed portion 44 is provided by, for example, intermittent application in which the negative electrode mixture slurry is not applied on a part of the negative electrode current collector 40.

The negative electrode active material included in the negative electrode mixture layer 42 is not particularly limited as long as it may reversibly occlude and release lithium ions. For example, carbon-based material such as natural graphite and artificial graphite, metals that form an alloy with lithium, such as Si and Sn, an alloy and oxide including these materials, or the like may be used.

The negative electrode active material may include the carbon-based material and a silicon-based material. Examples of the silicon-based material include Si, an alloy including Si, and silicon oxide such as $SiO_x$ (x represents 0.8 to 1.6). The silicon-based material is a negative electrode active material that may more increase the battery capacity than the carbon-based material. A content rate of the silicon-based material in the negative electrode active material is preferably greater than or equal to 3 mass% relative to a mass of the negative electrode active material from the viewpoints of increasing the battery capacity, inhibiting deterioration in the charge-discharge cycle characteristic, and the like. An upper limit of the content rate of the silicon-based material is, for example, 20 mass%. An average particle diameter (D50, a median diameter on a volumetric basis) of the carbon-based material is, for example, greater than or equal to 5 $\mu$m and less than or equal to 40 $\mu$m. D50 of the silicon-based material is, for example, greater than or equal to 1 $\mu$m and less than or equal to 15 $\mu$m. The D50 means a particle diameter at which a cumulative frequency is 50% from a smaller particle diameter side in a particle size distribution on a volumetric basis and also referred to as medium diameter. The particle size distribution of the carbon-based material and silicon-based material may be measured by using a laser diffraction-type particle size distribution measuring device (for example, MT3000II, manufactured by MicrotracBEL Corp.) with water as a dispersion medium.

Examples of the conductive agent included in the negative electrode mixture layer 42 include fibrous carbon and non-fibrous carbon. Examples of the fibrous carbon include carbon nanotube (CNT), carbon nanohorn (CNH), carbon nanofiber (CNF), vapor-grown carbon fiber (VGCF), electrospinning carbon fiber, polyacrylonitrile (PAN)-based carbon fiber, and pitch-based carbon fiber. Examples of the non-fibrous carbon include carbon particles such as carbon black (CB), acetylene black (AB), Ketjenblack, and graphite. These materials may be used singly, or a plurality of kinds thereof may be mixed to use.

The conductive agent preferably includes the fibrous carbon. The fibrous carbon preferably includes CNT. The structure of CNT is not particularly limited, and may be any of: a tubular structure in which graphene sheets composed of six-membered carbon rings are wound parallel to a fiber axis; a platelet structure in which graphene sheets composed of six-membered carbon rings are arranged perpendicular to a fiber axis; and a herringbone structure in which graphene sheets composed of six-membered carbon rings are wound with an oblique angle to a fiber axis. The layered structure of CNT is also not limited, and may be any of single-wall carbon nanotube (SWCNT) and multiwall carbon nanotube (MWCNT). Since SWCNT may form a conductive path in the negative electrode mixture layer 42 at a smaller amount than MWCNT, CNT preferably includes SWCNT. The negative electrode mixture layer 42 may include not only SWCNT but also MWCNT.

An average fiber length of the fibrous carbon is preferably greater than or equal to 0.1 $\mu$m and less than or equal to 40 $\mu$m, more preferably greater than or equal to 0.3 $\mu$m and less than or equal to 20 $\mu$m, and particularly preferably greater than or equal to 0.5 $\mu$m and less than or equal to 5 $\mu$m. Here, the average fiber length of the fibrous carbon is calculated by measuring lengths of 10 fibrous carbons by using a scanning electron microscope (which hereinafter may be referred to as SEM) to average these values. For example, the length of the fibrous carbon may be determined from an SEM image (pixel numbers 1024 $\times$ 1280) magnified 50 thousand times observed under a condition of an acceleration voltage of 5 kV. A diameter of the fibrous carbon may be, for example, greater than or equal to 1 nm and less than or equal to 100 nm. The diameter of the fibrous carbon is calculated by measuring thicknesses of 10 fibrous carbons by using an SEM to average these values.

A content rate of the conductive agent in the negative electrode mixture layer 42 is, for example, greater than or equal to 0.05 mass% and less than or equal to 1.5 mass%. Here, the content rate of the conductive agent is a percentage of a mass of the conductive agent relative to the mass of the negative electrode active material. As described later, the content rate of the conductive agent changes in the longitudinal direction of the negative electrode mixture layer 42.

Examples of the binder included in the negative electrode mixture layer 42 include styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). The binder may include fluororesins such as polytetrafluoroethylene (PTFE) and polyvinylidene fluoride (PVdF), polyacrylonitrile (PAN), a polyimide resin, an acrylic resin, and a polyolefin resin. These materials may be used singly, or a plurality of kinds thereof may be mixed to use.

Next, the change in the content rate of the conductive agent included in the negative electrode mixture layer 42 in the longitudinal direction of FIG. 3 will be described with reference to FIGS. 4(a) to 4(d). In FIG. 4(a), the content rate of the conductive agent in the outer end of winding 42b is higher than the content rate of the conductive agent in the inner end of winding 42a, and the content rate of the conductive agent increases at a certain rate from the inner end of winding 42a to the outer end of winding 42b. When the electrode assembly 14 expands and contracts with charge and discharge of the battery, the outer end of winding 42b is more likely to expand and contract than the inner end of winding 42a because the stress is not applied to the outer end of winding 42b compared with the inner end of winding 42a. Setting the content rate of the conductive agent in the outer end of winding 42b to be higher than the content rate of the conductive agent in the inner end of winding 42a may achieve the electron conductivity between the negative electrode active materials in the outer end of winding 42b, and may reduce an amount of the conductive agent not contributing to the battery capacity as an entirety of the negative electrode mixture layer. This may improve the charge-discharge cycle characteristic of the battery. The effect of the present disclosure is remarkable with high-rate charge and discharge because such charge and discharge are likely to generate a difference in expansion and contraction between the inner end of winding 42a and the outer end of winding 42b.

The content rate of the conductive agent in the outer end of winding 42b is preferably greater than or equal to 0.1 mass% and less than or equal to 3 mass% relative to the mass of the negative electrode active material. This may improve the charge-discharge cycle of the battery with keeping the battery capacity.

As shown in FIG. 4(b), the gradient indicating the increasing rate of the content rate of the conductive agent from the inner end of winding 42a to the outer end of winding 42b may not be constant, and the gradient may change in the middle. In FIG. 4(c), the content rate of the conductive agent increases from the inner end of winding 42a to the outer end of winding 42b, and the content rate of the conductive agent is constant between the inner end of winding 42a and the outer end of winding 42b. In FIG. 4(d), the content rate of the conductive agent increases from the inner end of winding 42a to the outer end of winding 42b, and the content rate of the conductive agent is constant near the outer end of winding 42b. Similarly, as long as the content rate of the conductive agent increases from the inner end of winding 42a and the outer end of winding 42b, the content rate of the conductive agent may be constant near the inner end of winding 42a. As indicated in FIGS. 4(c) and 4(d), provided is a region where the content rate of the conductive agent continuously increases from the inner end of winding 42a side to the outer end of winding 42b side in at least a part of the negative electrode mixture layer 42. In this region, the content rate of the conductive agent preferably increases linearly, but may increase nonlinearly. This may set the content rate of the conductive agent in the inner end of winding 42a of the negative electrode mixture layer 42 to be higher than the content rate of the conductive agent in the outer end of winding 42b.

Next, described is a method for forming the negative electrode mixture layer 42 in which the content rate of the conductive agent changes from one side to the other side of the inner end of winding 42a side and the outer end of winding 42b side. To form such a negative electrode mixture layer 42, a multilayer die coater is preferably used. Using the multilayer die coater may simultaneously apply a plurality of negative electrode mixture slurries having different content rates of the conductive agent on the negative electrode current collector 40 with regulating a mixing ratio thereof. When the negative electrode mixture slurry is applied on the negative electrode current collector 40, the negative electrode current collector 40 moves relative to the multilayer die coater. Thus, applying the plurality of the negative electrode mixture slurries having different content rates of the conductive agent on the negative electrode current collector 40 with changing the mixing ratio thereof at a predetermined timing may form the region where the content rate of the conductive agent changes from the inner end of winding 42a side to the outer end of winding 42b side at any position in the negative electrode mixture layer 42. For example, prepared are: a first negative electrode mixture slurry containing the conductive agent; and a second negative electrode mixture slurry having a content rate of the conductive agent being lower than that in the first negative electrode mixture slurry. Then, using the multilayer die coater, the first and second negative electrode mixture slurries are applied from the inner end of winding 42a to the outer end of winding 42b of the negative electrode current collector 40 with increasing the mixing ratio of the second negative electrode mixture slurry to the first negative electrode mixture slurry to obtain the negative electrode mixture layer 42 having the profile illustrated in FIG. 4(a).

Note that, like the positive electrode 11 illustrated in FIG. 3, even when the negative electrode mixture layer 42 of the negative electrode 12 is separated into two or more portions with the exposed portion, the content rate of the conductive agent in the outer end of winding 42b is higher than the content rate of the conductive agent in the inner end of winding 42a. The region where the content rate of the conductive agent increases from the inner end of winding 42a side to the outer end of winding 42b side is preferably formed in at least a part of the negative electrode mixture layer 42 continued from the inner end of winding 42a.

EXAMPLES

Hereinafter, the present disclosure will be further described with Examples, but the present disclosure is not limited to these Examples.

[Production of Positive Electrode]

Mixing 95 parts by mass of $LiNi_{0.8}Co_{0.15}Al_{0.05}O_2$, 2.5 parts by mass of acetylene black (AB), and 2.5 parts by mass of polyvinylidene fluoride (PVdF) having an average molecular weight of 1.1 million was performed, and an appropriate amount of N-methyl-2-pyrrolidone (NMP) was added to prepare a positive electrode mixture slurry with a solid content of 70 mass%. Then, this positive electrode mixture slurry was applied on both surfaces of a band-shaped positive electrode current collector made of aluminum foil, the coating was dried and then rolled, and cut to a predetermined electrode size to produce a positive electrode in which positive electrode mixture layers were formed on both the surfaces of the positive electrode current collector. A positive electrode exposed portion where the mixture layer was absent and the current collector surface was exposed was provided at the substantially center in a longitudinal direction of the positive electrode. A positive electrode lead made of aluminum was welded with the positive electrode exposed portion.

[Production of Negative Electrode]

As a negative electrode active material, graphite having an average particle diameter (D50) of 20 $\mu$m and SiO

having D50 of 5 μm were used. As a conductive agent, single-wall carbon nanotube (SWCNT) having a diameter of 1.5 nm and a length of 10 μm was used. Mixing 95 parts by mass of the graphite, 5 parts by mass of the SiO, 1 part by mass of the SWCNT, 1 part by mass of carboxymethylcellulose (CMC), and 1 part by mass of styrene-butadiene rubber (SBR) was performed, and an appropriate amount of water was added to prepare a first negative electrode mixture slurry. Mixing 95 parts by mass of the graphite, 5 parts by mass of the SiO, 1 part by mass of the CMC, and 1 part by mass of the SBR was performed, and an appropriate amount of water was added to prepare a second negative electrode mixture slurry. Then, the first negative electrode mixture slurry and the second negative electrode mixture slurry were set to a multilayer die coater, the first negative electrode mixture slurry and the second negative electrode mixture slurry were applied on both surfaces of a band-shaped negative electrode current collector made of copper foil similarly from an inner end of winding to an outer end of winding with continuously changing a mixing ratio therebetween from 0: 1 to 1:0, and then the coating was dried. The dried coating was rolled by using a roller, and then cut to a predetermined electrode size to produce a positive electrode in which negative electrode mixture layers were formed on both the surfaces of the negative electrode current collector. A negative electrode exposed portion where the mixture layer was absent and the current collector surface was exposed was provided in the inner end of winding. A negative electrode lead made of nickel was welded with the negative electrode exposed portion.

[Preparation of Electrolyte]

Into 100 parts by mass of a mixed solvent composed of ethylene carbonate (EC) and dimethyl methyl carbonate (DMC) (EC:DMC = 1:3 at a volume ratio), 5 parts by mass of vinylene carbonate (VC) was added. Into this mixed solvent, $LiPF_6$ was dissolved so that the concentration was 1 mol/L to prepare an electrolyte.

[Production of Secondary Battery]

The above positive electrode and the above negative electrode were wound with a separator made of polyethylene interposed therebetween to produce an electrode assembly. Insulating plates were disposed on upper and lower sides of the electrode assembly respectively, and the electrode assembly was housed in a cylindrical exterior. Then, a negative electrode lead was welded with a bottom of the exterior, and a positive electrode lead was welded with a sealing assembly. Thereafter, the electrolyte was injected inside the exterior by a pressure reducing method, and then an opening end of the exterior was sealed to be caulked to the sealing assembly with a gasket interposed therebetween to produce a secondary battery. A capacity of the produced secondary battery was 2500 mAh.

<Example 2>

A secondary battery was produced in the same manner as in Example 1 except that, in the production of the negative electrode, the amount of the SWCNT included in the first negative electrode mixture slurry was 0.2 parts by mass.

<Example 3>

A secondary battery was produced in the same manner as in Example 1 except that, in the production of the negative electrode, the amount of the SWCNT included in the first negative electrode mixture slurry was 0.6 parts by mass.

<Example 4>

A secondary battery was produced in the same manner as in Example 1 except that, in the production of the negative electrode, the amount of the SWCNT included in the first negative electrode mixture slurry was 2 parts by mass.

<Comparative Example 1>

A secondary battery was produced in the same manner as in Example 1 except that, in the production of the negative electrode, the first negative electrode mixture slurry and the second negative electrode mixture slurry were not mixed and only the second negative electrode mixture slurry was applied on both the surfaces of the negative electrode current collector.

<Comparative Example 2>

A secondary battery was produced in the same manner as in Example 1 except that, in the production of the negative electrode: mixing 95 parts by mass of the graphite, 5 parts by mass of the SiO, 0.5 parts by mass of the SWCNT, 1 part by mass of the CMC, and 1 part by mass of the SBR was performed, and an appropriate amount of water was added to prepare a third negative electrode mixture slurry; and only the third negative electrode mixture slurry was applied on both the surfaces of the negative electrode current collector.

<Comparative Example 3>

A secondary battery was produced in the same manner as in Example 1 except that, in the production of the negative electrode, the first negative electrode mixture slurry and the second negative electrode mixture slurry were applied from the inner end of winding to the outer end of winding of the negative electrode current collector with continuously changing the mixing ratio therebetween from 1:0 to 0:1.

<Comparative Example 4>

A secondary battery was produced in the same manner as in Comparative Example 2 except that, in the production of the negative electrode, the amount of the SWCNT included in the third negative electrode mixture slurry was 0.1 part by mass.

<Comparative Example 5>

A secondary battery was produced in the same manner as in Comparative Example 2 except that, in the production of the negative electrode, the amount of the SWCNT included in the third negative electrode mixture slurry was 0.3 parts by mass.

<Comparative Example 6>

A secondary battery was produced in the same manner as in Comparative Example 2 except that, in the production of the negative electrode, the amount of the SWCNT included in the third negative electrode mixture slurry was 1 part by mass.

[Evaluation of Capacity Maintenance Rate]

Under an environment temperature at 25°C, the non-aqueous electrolyte secondary battery of Examples and Comparative Examples was charged at a constant current of 1 C until 4.2 V, and then charged at a constant voltage of 4.2 V until a current value reached 0.05 C. After the non-aqueous electrolyte secondary battery was left to stand for 20 minutes, the battery was discharged at a constant current of 0.5 C until 2.5 V. This charge and discharge was specified as one cycle, and 300 cycles were performed. A capacity maintenance rate in the charge-discharge cycle of the non-aqueous electrolyte secondary battery of each Example and each Comparative Example was determined by the following formula.

$$\text{Capacity Maintenance Rate} = (\text{Discharge Capacity at 300th Cycle} / \text{Discharge Capacity at 1st Cycle}) \times 100$$

Table 1 summarizes the evaluation results of the capacity maintenance rates of the non-aqueous electrolyte secondary batteries of the Examples and Comparative Examples. Table 1 also shows: the content rates of the conductive agent in the inner end of winding and the outer end of winding; and the content rate of the conductive agent in the negative electrode mixture layer (average content rate in an entirety of the negative electrode mixture layer).

[Table 1]

| | Content rate of conductive agent [mass%] | | | Capacity maintenance rate [%] |
|---|---|---|---|---|
| | Inner end of winding | Outer end of winding | Entirety | |
| Example 1 | 0 | 1 | 0.5 | 87 |
| Example 2 | 0 | 0.2 | 0.1 | 78 |
| Example 3 | 0 | 0.6 | 0.3 | 81 |
| Example 4 | 0 | 2 | 1 | 86 |

(continued)

| | Content rate of conductive agent [mass%] | | | Capacity maintenance rate [%] |
|---|---|---|---|---|
| | Inner end of winding | Outer end of winding | Entirety | |
| Comparative Example 1 | 0 | 0 | 0 | 70 |
| Comparative Example 2 | 0.5 | 0.5 | 0.5 | 77 |
| Comparative Example 3 | 1 | 0 | 0.5 | 73 |
| Comparative Example 4 | 0.1 | 0.1 | 0.1 | 71 |
| Comparative Example 5 | 0.3 | 0.3 | 0.3 | 71 |
| Comparative Example 6 | 1 | 1 | 1 | 73 |

The batteries of Examples have an improved capacity maintenance rate compared with the battery of Comparative Example 1, which includes no conductive agent. The batteries of Examples have an improved capacity maintenance rate compared with the batteries of Comparative Example 2 and Comparative Examples 4 to 6, which entirely and uniformly include the conductive agent in the negative electrode mixture layer. Furthermore, the batteries of Examples have an improved capacity maintenance rate compared with the battery of Comparative Example 3, which has a higher content rate of the conductive agent in the inner end of winding of the negative electrode mixture layer. As above, it is found from the results shown in Table 1 that the specific method of disposing the conductive agent remarkably exhibits the effect of improving the capacity maintenance rate.

REFERENCE SIGNS LIST

10 Secondary battery, 11 Positive electrode, Inner end of winding, 12 Negative electrode, 13 Separator, 14 Electrode assembly, 15 Exterior, 16 Sealing assembly, 17, 18 Insulating plate, 19 Positive electrode lead, 20 Negative electrode lead, 21 Grooved portion, 22 Filter, 23 Lower vent member, 24 Insulating member, 25 Upper vent member, 26 Cap, 26a Opening, 27 Gasket, 28 Winding axis, 30 Positive electrode current collector, 32 Positive electrode mixture layer, 34 Positive electrode exposed portion, 40 Negative electrode current collector, 42 Negative electrode mixture layer, 42a Inner end of winding, 42b Outer end of winding, 44 Negative electrode exposed portion

**Claims**

1.   A non-aqueous electrolyte secondary battery, comprising:

an electrode assembly in which a band-shaped positive electrode and a band-shaped negative electrode are wound with a separator interposed therebetween;
an electrolyte liquid; and
an exterior housing the electrode assembly and the electrolyte liquid, wherein
the negative electrode has: a negative electrode current collector; and a negative electrode mixture layer formed on a surface of the negative electrode current collector and including a negative electrode active material and a conductive agent, and
in the negative electrode mixture layer, a content rate of the conductive agent in an outer end of winding is higher than a content rate of the conductive agent in an inner end of winding, and the negative electrode mixture layer has a region where a content rate of the conductive agent continuously increases from a side of the inner end of winding to a side of the outer end of winding.

2.   The non-aqueous electrolyte secondary battery according to claim 1, wherein the content rate of the conductive agent in the outer end of winding is greater than or equal to 0.1 mass% and less than or equal to 3 mass% relative to a mass of the negative electrode active material.

3. The non-aqueous electrolyte secondary battery according to claim 1 or 2, wherein the conductive agent includes a fibrous carbon.

4. The non-aqueous electrolyte secondary battery according to any one of claims 1 to 3, wherein

the negative electrode active material includes a carbon-based material and a silicon-based material, and
a content rate of the silicon-based material in the negative electrode active material is greater than or equal to 3 mass% relative to a mass of the negative electrode active material.

# Figure 1

# Figure 2

# Figure 3

Figure 4

CONTENT RATE OF CONDUCTIVE AGENT

（a）

INNER END OF WINDING       OUTER END OF WINDING

CONTENT RATE OF CONDUCTIVE AGENT

（b）

INNER END OF WINDING        OUTER END OF WINDING

CONTENT RATE OF CONDUCTIVE AGENT

（c）

INNER END OF WINDING        OUTER END OF WINDING

CONTENT RATE OF CONDUCTIVE AGENT

（d）

INNER END OF WINDING       OUTER END OF WINDING

## INTERNATIONAL SEARCH REPORT

International application No.

**PCT/JP2022/002126**

### A. CLASSIFICATION OF SUBJECT MATTER

***H01M 4/133***(2010.01)i; ***H01M 4/134***(2010.01)i; ***H01M 4/62***(2006.01)i; ***H01M 10/0587***(2010.01)i
FI:   H01M10/0587; H01M4/62 Z; H01M4/133; H01M4/134

According to International Patent Classification (IPC) or to both national classification and IPC

### B. FIELDS SEARCHED

Minimum documentation searched (classification system followed by classification symbols)

H01M4/133; H01M4/134; H01M4/62; H01M10/0587

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2013-191396 A (HITACHI LTD) 26 September 2013 (2013-09-26) claims, paragraphs [0031], [0040], [0063]-[0070], fig. 7-8 | 1-2, 4 |
| Y | | 3 |
| Y | JP 2017-501546 A (ILJIN ELECTRIC CO LTD) 12 January 2017 (2017-01-12) claims | 3 |
| A | JP 2015-130298 A (TOYOTA MOTOR CORP) 16 July 2015 (2015-07-16) fig. 5 | 1-4 |
| A | JP 2011-210384 A (PANASONIC CORP) 20 October 2011 (2011-10-20) claims | 1-4 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 March 2022** | **12 April 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

## INTERNATIONAL SEARCH REPORT
### Information on patent family members

International application No.

**PCT/JP2022/002126**

| Patent document cited in search report | | | Publication date (day/month/year) | Patent family member(s) | | | Publication date (day/month/year) |
|---|---|---|---|---|---|---|---|
| JP | 2013-191396 | A | 26 September 2013 | WO | 2013/136942 | A1 | |
| JP | 2017-501546 | A | 12 January 2017 | US claims | 2016/0365565 | A1 | |
| | | | | WO | 2015/099324 | A1 | |
| | | | | KR | 10-2015-0074903 | A | |
| | | | | CN | 105849946 | A | |
| JP | 2015-130298 | A | 16 July 2015 | US fig. 5 | 2015/0194664 | A1 | |
| | | | | CN | 104766993 | A | |
| | | | | KR | 10-2015-0083025 | A | |
| JP | 2011-210384 | A | 20 October 2011 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2011165388 A